# EUROPEAN PATENT SPECIFICATION

(11) **EP 4 388 022 B1**
(45) Date of publication and mention of the grant of the patent: **18.06.2025**
(21) Application number: 22758042.0
(22) Date of filing: 17.08.2022
(51) Int. Cl.: C08G 18/02, C08G 18/79, C08G 18/28, C09D 175/04, C08G 18/22, C08G 18/16, C08G 18/80

(54) **PROCESS FOR THE PREPARATION OF POLYCARBODIIMIDES WITH AZIRIDINE FUNCTIONS, WHICH MAY BE USED AS CROSSLINKING AGENT**
VERFAHREN ZUR HERSTELLUNG VON POLYCARBODIIMIDEN MIT AZIRIDINFUNKTIONEN, DIE ALS VERNETZER VERWENDET KÖNNEN
PROCÉDÉ DE PRÉPARATION DES POLYCARBODIIMIDES AUX FONCTIONS AZIRIDINE, QUI QUI PEUT ÊTRE UTILISÉS COMME AGENT DE RÉTICULATION

(30) Priority: 18.08.2021 NL 2028984
(43) Date of publication of application: 26.06.2024
(73) Proprietor: Stahl International B.V., 5145 PE Waalwijk (NL)
(72) Inventor: DERKSEN, Andries Johannes, 5145 PE Waalwijk (NL); VISSERS, Suzanne, 5145 PE Waalwijk (NL)
(74) Representative: V.O.
(86) International application number: PCT/NL2022/050470
(87) International publication number: WO 2023/022591

(56) References cited:
- EP-A1- 0 507 407
- EP-A1- 1 106 613
- DATABASE WPI Week 201948, Derwent World Patents Index; AN 2019-45163B, XP002805922

## Description

This invention relates to a process for the preparation of polycarbodiimides which also contain aziridine functions and which are not genotoxic. These aziridine-functional polycarbodiimides may be used as crosslinking agent. The invention is set out in the appended set of claims.

Known crosslinking agents for aqueous polymers containing carboxylic acid functions are polycarbodiimides, epoxides and aziridines. Particularly aziridines are effective crosslinking agents and have been used for many years. Aziridine crosslinkers react fast and the resulting crosslinked resins are tough and display much improved chemical resistances compared to un-crosslinked resins. The most widely used aziridine crosslinker is 2-ethyl-2-[[3-(2-methylaziridin-1-yl)propionyl]methyl]propane-1,3-diylbis(2-methylaziridine-1-propionate) (CAS 64265-57-2), which is commercially available as XL-706 from Stahl Polymers. However, the major disadvantage of this compound is its classification, which is mutagenic. Hence, highly desired would be an aziridine crosslinker having the beneficial crosslinking properties but not the unfavourable mutagenic properties.

Polycarbodiimides are well known crosslinking agents for aqueous polymers containing carboxylic acid functions. A review of the development of the preparation and the application of polycarbodiimides is described in EP 1644428. Of particular interest are the polycarbodiimides that possess additional functional groups that contribute to the crosslinking.

The preparation and application of multifunctional polycarbodiimides as crosslinking agents is described in EP 0507407. These crosslinking agents contain carbodiimide groups and at least one other functional group. Both groups contribute to the crosslinking. This patent mentions several types of other functional groups, and the examples include epoxide groups, trialkyloxysilane groups, azetidine groups and aziridine groups as the other functional groups in these multifunctional polycarbodiimides. However, EP 0507407 teaches that the resulting aziridine-functional polycarbodiimides are mutagenic, which renders them undesirable to use as crosslinking agents.

EP 2598555 also describes the preparation of multifunctional polycarbodiimides as crosslinking agents, with as characteristic that one or more mono- and/or polyisocyanates containing one or more additional functional groups of which the isocyanate group contributes to the carbodiimide formation is present during the polycarbodiimidization step, which results in relatively low viscosities of the obtained polycarbodiimides. EP 2598555 mentions many possibilities for the additional functional groups, including aziridine groups, but the examples and the dependent claims only mention trialkyloxysilane groups.

WO 2020/020714 describes the preparation and use of specific polymers containing multiple aziridine functional groups, which are present as -NH-C(O)-[O-CHR"-CHR']m-aziridine groups. The multiple -NH-C(O)-[O-CHR''-CHR']m-aziridine groups are connected via aliphatic hydrocarbon functionality, cycloaliphatic hydrocarbon functionality, aromatic hydrocarbon functionality, isocyanurate functionality, iminooxadiazindione functionality, ether functionality, ester functionality, amide functionality, carbonate functionality, urethane functionality, urea functionality, biuret functionality, allophanate functionality, uretdione functionality and any combination thereof. The examples in WO 2020/020714 demonstrate that these specific polymers containing multiple aziridine functional groups are not genotoxic.

The object of the present invention is to provide a process for the preparation of aziridine-functional polycarbodiimides, which are not genotoxic, and which are effective crosslinkers for aqueous polymers containing carboxylic acid functions.

According to the present invention there is provided a process for the preparation of aziridine-functional polycarbodiimides, which are not genotoxic, comprising the steps of:
i) the reaction of polyisocyanates or a mixture of mono- and polyisocyanates at 80 - 200 °C in the presence of 0.02 - 5 weight percentage of a carbodiimide catalyst, in which an isocyanate functional polycarbodiimide, optionally in admixture with a polycarbodiimide, is formed with a mean value of 1 - 10 carbodiimide functions of isocyanate functional polycarbodiimide optionally combined with polycarbodiimide; and
ii) terminating and/or chain extending the isocyanate functional polycarbodiimide chain, during or after the formation of the polycarbodiimide chain by the addition of 0.05 to 0.95 equivalent, regarding to the isocyanate functions that are not consumed in the formation of the polycarbodiimide chain, with a first compound containing a hydrophilic group and one or multiple amine and/or hydroxyl functions, together with, prior to, or followed by reacting the remaining isocyanate functions with one or multiple second compounds containing one or multiple amine and/or hydroxyl functions,
   in which 0 to 60 weight% of an organic solvent and/or 0 to 50 weight% of a plasticizer, and/or 0 to 30 weight% of surface active component is added during, before or after the carbodiimide forming reaction and/or the terminating reaction and/or the chain extending reaction,
   wherein at least one of the second compounds containing one or more amine and/or hydroxyl functions also contains one or multiple aziridine functional groups as additional functional group and is an ester of one or more 1-Aziridinealkanoic acid moieties or derivatives thereof.

In relevant examples of EP 0507407, an additional aziridine functionality is reacted onto an isocyanate functional polycarbodiimide oligomer by using 2-methylaziridine or 1-(2-hydroxyethyl)-ethyleneimine.

Surprisingly, it became apparent during the present process that the obtained aziridine-functional polycarbodiimide is not genotoxic if the additional aziridine functional group is incorporated by reacting as one of the second compounds an ester of one or more 1-Aziridinealkanoic acid moieties or derivative thereof that further comprises a free hydroxy or amine functionality onto the isocyanate functional polycarbodiimide oligomer. In particular when the ester is selected from the group consisting of: 1-Aziridinepropanoic acid, 1,1'-[2-[[3-(1-aziridinyl)-1-oxopropoxy]methyl]-2-(hydroxymethyl)-1,3-propanediyl] ester (CAS 57116-45-7); 1-Aziridineacetic acid, α-methyl-, 2-[[2-(1-aziridinyl)-1-oxopropoxy]methyl]-2-(hydroxymethyl)-1,3-propanediyl ester (CAS 120933-17-7); 1-Aziridinepropanoic acid, 2-ethyl-, 2-[[3-(2-ethyl-1-aziridinyl)-1-oxopropoxy]methyl]-2(hydroxymethyl)-1,3-propanediyl ester (CAS 121336-97-8); 1-Aziridinepropanoic acid, 2,2-dimethyl-, 2-[[3(2,2-dimethyl-1-aziridinyl)-1-oxopropoxy]ethyl]-2-(hydroxymethyl)-1,3-propanediyl ester (CAS 121336-99-0); 1-Aziridinepropanoic acid, 2-methyl-, 1,1'-[2-(hydroxymethyl)-2-[[3-(2-methyl-1-aziridinyl)-1-oxopropoxy]methyl]-1,3-propanediyl] ester (CAS 121366-89-0); 1-Aziridinepropanoic acid, 2-methyl-, 2-[[3-hydroxy-2,2-bis[[3-(2-methyl-1-aziridinyl)-1-oxopropoxy]methyl]propoxy]methyl]-2-[[3-(2-methyl-1-aziridinyl)-1-oxopropoxy]methyl]-1,3-propanediyl ester (CAS 125687-19-6); 1-Aziridinepropanoic acid, 2-propyl-, 2-(hydroxymethyl)-2-[[1-oxo-3-(2-propyl-1-aziridinyl)propoxy]methyl]-1,3-propanediyl ester (CAS 134449-00-6); 1-Aziridinepropanoic acid, 2-[[3-(1-aziridinyl)-1-oxopropoxy]methyl]-2-(2-hydroxyethyl)-1,3-propanediyl ester (CAS 333754-04-4); 1-Aziridinepropanoic acid, 2-methyl-, 2-(2-hydroxyethyl)-2-[[3-(2-methyl-1-aziridinyl)-1-oxopropoxy]methyl]-1,3-propanediyl ester (CAS 333754-06-6); 1-Aziridinepropanoic acid, 2-methyl-, 1,1'-[2-[[3-[3-(1-aziridinyl)-1-oxopropoxy]-2-(hydroxymethyl)-2-[[3-(2-methyl-1-aziridinyl)-1-oxopropoxy]methyl]propoxy]methyl]-2-[[3-(2methyl-1-aziridinyl)-1-oxopropoxy]methyl]-1,3-propanediyl] ester (CAS 959712-87-9); 1-Aziridinebutanoic acid, 1,1'-[2-[[3-(1-aziridinyl)-1-oxobutoxy]methyl]-2-(hydroxymethyl)-1,3-propanediyl] ester (CAS 2583876-73-5); 1-Aziridineacetic acid, 2-[[2-(1-aziridinyl)-1-oxoethoxy]methyl]-2-(hydroxymethyl)-1,3-propanediyl ester (CAS 2583876-75-7); β-Alanine, N-[2-(1-aziridinyl)ethyl]-, 3-[3-(1-aziridinyl)-1-oxopropoxy]-2-(hydroxymethyl)-2-[[(1-oxo-2-propen-1-yl)oxy]methyl]propyl ester (CAS 497092-87-2); and mixtures thereof.

In addition, it was surprisingly found that the crosslinking effectiveness was as good as or even better than obtained with the reference mutagenic aziridine crosslinker CAS 64265-57-2. Thus, an aziridine-type of crosslinker is obtained by the present process that is not genotoxic and that is effective as crosslinker for aqueous carboxylic acid containing resins.

Genotoxicity is the toxic effect created by a chemical or an agent on genes or DNA of a cell. Thus, a chemical that has a genotoxic effect is a genotoxin. Mutagenicity is the ability of a substance to cause or induce mutations in the genetic material of cells or organisms. A genotoxic chemical is not necessarily a mutagenic substance, because genotoxic effects are not necessarily always associated with mutations. However, all mutagenic agents are genotoxic since they have the property of destructing genetic material of the cell. So, if a substance is not genotoxic then it is also not mutagenic.

An additional advantage of having both aziridine functions and carbodiimide functions in an aziridine-functional polycarbodiimide is that both functional groups are reactive towards the carboxylic groups of the aqueous carboxylic acid functional resins and thus the concentration of functional groups of an aziridine-functional polycarbodiimide is relatively high compared to a polycarbodiimide that only contains carbodiimide groups as functional groups, whereas having a combination of carbodiimide groups and trialkoxysilane results in two functional groups that are not both reactive towards the carboxylic groups of the aqueous carboxylic acid functional resins. Hence, there is a higher concentration of aziridine and carbodiimide groups combined, which can be summed together when considering what would be the appropriate amount of crosslinker to crosslink aqueous carboxylic acid functional resins.

The genotoxicity can be measured by the ToxTracker^{®} assay (Toxys, Leiden, The Netherlands) as further described herein. The ToxTracker^{®} assay can be applied for pure substances or for compositions. The ToxTracker assay is a panel of six validated GFP-based mouse embryonic stem (mES) reporter cell lines that can be used to identify the biological reactivity and potential carcinogenic properties of newly developed compounds in a single test. ToxTracker is a mammalian stem cell-based assay that monitors activation of specific cellular signalling pathways for detection of the biological reactivity of compounds. In contrast to the cancer-derived cell lines that are currently used for in vitro genotoxicity testing, stem cells are genetically stable and proficient in all cellular pathways required for accurate detection of potentially carcinogenic properties of compounds. Extensive whole-genome transcription profiling has led to identification of a panel of biomarker genes that are preferentially activated upon exposure to different classes of carcinogens and toxicants. To allow easy assessment of the activation status of these biomarker genes, Toxys has generated green fluorescent (GFP) mES reporter cell lines. These reporters were created using bacterial artificial chromosomes (BAC) that contain the complete biomarker gene including promoter and regulatory elements ensuring physiological regulation of the GFP reporters following transfection into stem cells. The ToxTracker assay contains two reporters for genotoxicity: Bscl2-GFP, which is activated upon formation of bulky DNA lesions and subsequent DNA replication stress and Rtkn-GFP, which is activated upon induction of DNA double strand breaks. Directly DNA reactive substances usually activate both markers for genotoxicity, while activation of only Rtkn-GFP is often observed for substances that are indirectly genotoxic due to oxidative damage or aneugenicity. The ToxTracker assay was considered to have a positive response when a compound induces at least a 2 fold increase in GFP expression in any of the reporters. Activation of the Bscl2-GFP or Rtkn-GFP reporters indicate induction of DNA damage, Srxn1-GFP and Blvrb-GFP indicate induction of cellular oxidative stress and Ddit3-GFP activation is associated with the unfolded protein response. The Btg2-GFP reporter is controlled by the p53 tumor suppressor and is activated by DNA damage but can also be induced by oxidative stress, hypoxia, metabolic stress and apoptosis. A compound is considered not genotoxic when it induces a smaller than 2-fold increase in GFP expression in any of the reporters measured by the ToxTracker^{®} assay (Toxys, Leiden, The Netherlands).

An amount of organic solvent or plasticizer can be used in the present process, in order to obtain a viscosity that is convenient to use during the process or during the use of the obtained mixture of the aziridine-functional polycarbodiimide. This improves the ease of use. A plasticizer with some hydrophilic nature is preferred, such as tributoxy ethylphosphate, tetraethylene glycol dimethyl ether or triethylene glycol-mono-2-hexyl-hexanoate, so that the aziridine-functional polycarbodiimide together with the plasticizer can be dispersed easily in water or aqueous systems. The products of the present invention are pre-eminently made to be used in aqueous polymer systems and hence it is preferred that the solvent or solvent system is miscible or at least partially miscible with water. Examples of suitable solvents are: methyl acetate, ethyl acetate, N-methyl-pyrrolidone, N-ethyl-pyrrolidone, N-octyl-pyrrolidone, methoxypropyl acetate, ethoxypropyl acetate, methoxybutyl acetate, ethoxybutyl acetate, propyleneglycol diacetate, diglycoldimethylether, diglycoldiethylether, methylglycol acetate, ethylglycol acetate, butylglycol acetate, ethyl levulinate, butyl levulinate, levulinate propanediol ketal, acetone, methylethyl ketone, methylisobutyl ketone, propylene carbonate and related solvents.

The surface active materials used in the process of the present invention are generally the conventional surface active ionic or non-ionic agents that are used in the coatings industry with the exception of the hydroxyl or amine functional types.

The polyisocyanate which is used for the preparation of the aziridine-functional polycarbodiimide can be toluene-2,4-diisocyanate, toluene-2,6-diisocyanate and mixtures thereof, diphenylmethane-4,4-diisocyanate, 1,4-phenylenediisocyanate, dicyclohexyl-methane-4,4'-diisocyanate, 3-isocyanatomethyl-3,5,5-trimethylcyclo-hexylisocyanate, 1,6-hexyldiisocyanate, 1,5-pentyldiisocyanate, 1,3-bis(isocyanatomethyl)cyclohexane, 2,2,4-trimethyl-1,6-diisocyanatohexane (2,2,4-isomer, 2,4,4-isomer, or mixture thereof), 1,4-cyclohexyldiisocyanate, norbonyldiisocyanate, p-xylylene diisocyanate, 2,4'-diphenylmethane diisocyanate, and/or 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues. Particularly preferred polyisocyanates include diisocyanates and in particular aliphatic di- and polyisocyanates such as 3-isocyanatomethyl-3,5,5-trimethylcyclohexylisocyanate, 1,6-hexyldiisocyanate, 1,5-pentyldiisocyanate and dicyclohexyl-methane-4,4'-diisocyanate.

In the process of the present invention next to polyisocyanates also some mono-isocyanate may be used in step i). The amount of mono-isocyanate should not be too high so as to have sufficient unreacted isocyanate available to react with aziridine functional compound and to still obtain a mean value of carbodiimide functions above 1; preferably the mole fraction of mono-isocyanates in the isocyanate mixture should be less than 33%, more preferably below 25%. The mono-isocyanate may be an isocyanate containing a linear or branched alkyl, alkylene, alkyl-aryl or alkylene-aryl group with 4-25 carbon atoms or the mono-isocyanate may contain an additional functional group, such as a trimethoxysilane group, dimethoxymethylsilane group or a tri-ethoxysilane group. For example it may be an alkyl-, cycloalkyl, alkyl-aryl, or arylalkyl functional isocyanate, such as butylisocyanate, hexylisocyanate, octylisocyanate, undecylisocyanate, dodecylisocyanate, hexadecylisocyanate, octadecylisocyanate, cyclohexylisocyanate, phenylisocyanate, tolylisocyanate, 2-heptyl-3,4-bis(9-isocyanatononyl)-1-pentylcyclohexane, (3-isocyanato-propyl)trimethoxysilane, (3-isocyanatopropyl)tri-ethoxy-silane, or (3-isocyanatopropyl)methyldimethoxysilane. Preferably however only polyisocyanates are used; in that case the resulting amount of unreacted isocyanate groups is higher for a certain value of desired mean carbodiimide function allowing to have more of the aziridine functional compound reacted onto the polymer.

The carbodiimide catalyst which is used in the process may be any conventional carbodiimide catalyst, but preferably 1-methylphospholene-oxide or 2,5-dihydro-3-methyl-1-phenyl-1H-phosphole 1-oxide is used.

The mean value of carbodiimide functions in the polycarbodiimide chain can be selected by monitoring the first reaction step. The remaining amount of isocyanate after the first reaction step is a measure for this number. A polycarbodiimide chain with fewer carbodiimide functions is obtained by using a shorter reaction time and a polycarbodiimide chain with more carbodiimide functions is obtained by using a longer reaction time. Using a larger amount of the carbodiimide catalyst and using a higher reaction temperature result both in a higher reaction speed and thus in a shorter reaction time if the same number of carbodiimide functions in the polycarbodiimide chain is aimed for. The mean value of carbodiimide functions in the polycarbodiimide chain is also called the average carbodiimide functionality.

The products that are prepared according to the method of the present process can be dispersed easily in water or aqueous polymer dispersions in which they are used because a hydrophilic group has been incorporated into the polymer.

The first compound containing an hydrophilic group and one or multiple amine and/or hydroxyl functions is preferably a polyethoxy mono- or diol with a molecular weight between 100 and 3000 Dalton, a polyethoxy/polypropoxy mono- or diol with a molecular weight between 100 and 3000 Dalton and an ethoxy/propoxy ratio between 100/0 and 25/75, a polyethoxy mono- or diamine with a molecular weight between 100 and 3000, a polyethoxy/polypropoxy mono- or diamine with a molecular weight between 100 and 3000 Dalton and an ethoxy/propoxy ratio between 100/0 and 25/75, a diol or diamine containing a pendant polyalkoxy chain, an hydroxyl- or amine alkylsulphonate, or a dialkylamino-alkyl- alcohol or amine, or a mixture thereof.

The one or multiple second compounds containing one or multiple amine and/or hydroxyl functions, can be any mono-ol, mono-amine, diol, diamine or polyol or polyamine. Polymeric polyols particularly include diols and triols and mixtures thereof but higher functionality polyols may be used as well, for example as minor components in admixture with diols. The polyols may be members of any of the chemical classes of polymeric polyols used, such as polyester polyols, polyesteramide polyols, polyether polyols, polythioether polyols, polycarbonate polyols, polyacetal polyols, polyolefin polyols or mixtures thereof.

The one or multiple second compounds containing one or multiple amine and/or hydroxyl functions, can be a compound that contains one or multiple reactive groups with a reactivity towards functional groups in a polymer or a polymer dispersion, emulsion or solution in water or towards corresponding groups, for example by self-condensation or self-addition. The reactive functional group can be a halogen; alkenyl; arylalkene; alkynyl; arylalkyn; alkadiene; aldehyde; dialkylacetal; dithioacetal; ketone; unsaturated aldehyde; ketone or carboxylic ester; nitrile; imine; alkylalkoxy silane; alkoxysilane; anhydride; mixed anhydride; oxime-protected diisocyanate; diketone; ketoester; thioketoester; ketothioester; thioketothioester; or a mixture of one or multiple of such reactive groups; the reactive functional group can also be or contain a reactive ring system. The reactive ring system can be any ring system that can open upon an electrophilic or nucleophilic attack. The reactive ring system can be any three, four, five, six, seven or eight membered ring that contains one or multiple nitrogen and/or oxygen and/or sulphur and/or keto and/or keto-enol functions. Examples of such reactive ring systems are aziridine, epoxide, thiirane, azirine, oxirene, thiirene, azetidine, oxetane, thietane, beta-lactam, beta-lactone, thiethanon, furan, pyrroline, dihydrofuran, dihydrothiophene, pyrrolidine, tetrahydrofuran, tetrahydrothiophene, oxazolidine, dioxolane, oxathiolane, thiazolidine, imidazoline, dithiolane, pyrazolidine, pyrazoline, oxazoline, thiazoline, imidazoline, dioxole, oxazolon, pyrrolidone, butyrolactone, thiobutyrolactone, butyrothiolactone, thiobutyrothiolactone, oxazolidone, dioxolane-2-on, thiazolidinone, dihydropyridine, tetrahydropyridine, pyran, dihydropyran, tetrahydropyran, succinic acid anhydride, succinimide, thiopyran, dihydrothiopyran, tetrahydrothiopyran, dihydropyrimidine, tetrahydropyrimidine, hexahydropyrimidine, dioxane, morpholine, thiamorpholine, dithiane and triazine.

In an embodiment the one or multiple second compounds containing one or multiple amine and/or hydroxyl functions, can be a combination of one or multiple compounds that contains one or more aziridine reactive groups and one or multiple compounds that contain at least one further reactive group, other than aziridine, with a reactivity towards functional groups in a polymer or a polymer dispersion, emulsion or solution in water or towards corresponding groups, for example by self-condensation or self-addition. Addition of multiple different functional groups with a reactivity toward functional groups of a polymer, e.g. as comprised in a coating formulation, can advantageously increase the crosslinking performance of the formed aziridine-functional polycarbodiimides per unit weight and/or volume.

The one or multiple compound containing one or multiple amine and/or hydroxyl functions that also contains one or multiple aziridine functional groups as additional functional group can be an ester of one or more 1-Aziridinealkanoic acid moieties. The one or multiple compound containing one or multiple amine and/or hydroxyl functions that also contains one or multiple aziridine functional groups as additional functional group can be visualized by the following structure (I) 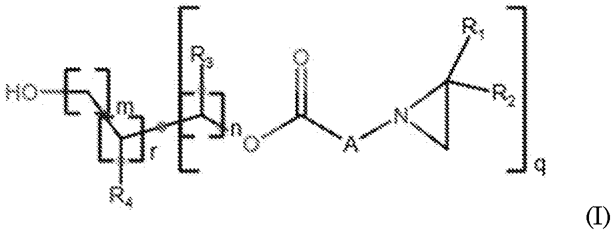 wherein m = 1 or larger; n = 1 or larger; q = 2 or 3; r = 3-q; R₁, R₂ and R₃ is H or alkyl; A is any length of alkyl or hetero-alkyl chain; R₄ can be any group, such as alkyl or a group that further contains functionality as between the []_{q} brackets.

Alternatively the one or multiple compound containing one or multiple amine and/or hydroxyl functions that also contains one or multiple aziridine functional groups as additional functional group can be visualized by the following structure (II) 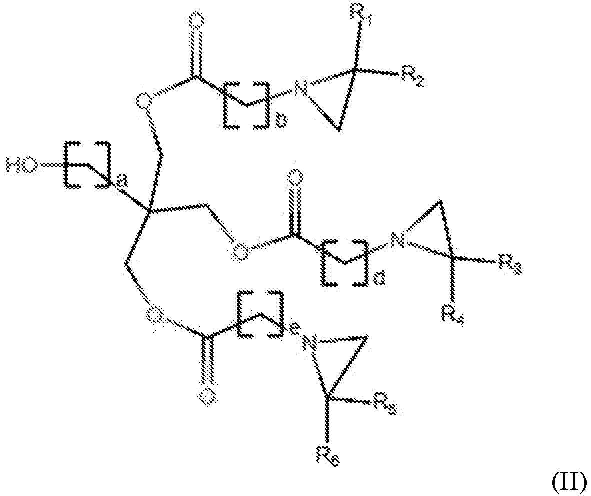 wherein a represents an alkyl chain with 1 or 2 carbon atoms; b,d, and e each individually represent an alkyl radical with between 1-3 carbon atoms; R₁,R₂,R₃,R₄,R₅,R₆ each individually represent a H radical or an alkyl radical with 1 or 2 carbon atoms.

Esters of one or more 1-Aziridinealkanoic acid moieties include 1-Aziridinealkanoic acid, 1,1'-[2-[[3-(1-aziridinyl)-1-oxoalkoxy]alkyl]-2-(hydroxyalkyl)-α,ω-alkanediyl] esters or derivatives thereof. Preferred examples of esters of one or more 1-Aziridinealkanoic acid moieties are: 1-Aziridinepropanoic acid, 1,1'-[2-[[3-(1-aziridinyl)-1-oxopropoxy]methyl]-2-(hydroxymethyl)-1,3-propanediyl] ester (CAS 57116-45-7); 1-Aziridineacetic acid, α-methyl-, 2-[[2-(1-aziridinyl)-1-oxopropoxy]methyl]-2-(hydroxymethyl)-1,3-propanediyl ester (CAS 120933-17-7); 1-Aziridinepropanoic acid, 2-ethyl-, 2-[[3-(2-ethyl-1-aziridinyl)-1-oxopropoxy]methyl]-2(hydroxymethyl)-1,3-propanediyl ester (CAS121336-97-8); 1-Aziridinepropanoic acid, 2,2-dimethyl-, 2-[[3(2,2-dimethyl-1-aziridinyl)-1-oxopropoxy]ethyl]-2-(hydroxymethyl)-1,3-propanediyl ester (CAS121336-99-0); 1-Aziridinepropanoic acid, 2-methyl-, 1,1'-[2-(hydroxymethyl)-2-[[3-(2-methyl-1-aziridinyl)-1-oxopropoxy]methyl]-1,3-propanediyl] ester (CAS 121366-89-0); 1-Aziridinepropanoic acid, 2-methyl-, 2-[[3-hydroxy-2,2-bis[[3-(2-methyl-1-aziridinyl)-1-oxopropoxy]methyl]propoxy]methyl]-2-[[3-(2-methyl-1-aziridinyl)-1-oxopropoxy]methyl]-1,3-propanediyl ester (CAS125687-19-6); 1-Aziridinepropanoic acid, 2-propyl-, 2-(hydroxymethyl)-2-[[1-oxo-3-(2-propyl-1-aziridinyl)propoxy]methyl]-1,3-propanediyl ester (CAS134449-00-6); 1-Aziridinepropanoic acid, 2-[[3-(1-aziridinyl)-1-oxopropoxy]methyl]-2-(2-hydroxyethyl)-1,3-propanediyl ester (CAS 333754-04-4); 1-Aziridinepropanoic acid, 2-methyl-, 2-(2-hydroxyethyl)-2-[[3-(2-methyl-1-aziridinyl)-1-oxopropoxy]methyl]-1,3-propanediyl ester (CAS333754-06-6); 1-Aziridinepropanoic acid, 2-methyl-, 1,1'-[2-[[3-[3-(1-aziridinyl)-1-oxopropoxy]-2-(hydroxymethyl)-2-[[3-(2-methyl-1-aziridinyl)-1-oxopropoxy]methyl]propoxy]methyl]-2-[[3-(2methyl-1-aziridinyl)-1-oxopropoxy]methyl]-1,3-propanediyl] ester (CAS 959712-87-9); 1-Aziridinebutanoic acid, 1,1'-[2-[[3-(1-aziridinyl)-1-oxobutoxy]methyl]-2-(hydroxymethyl)-1,3-propanediyl] ester (CAS 2583876-73-5); 1-Aziridineacetic acid, 2-[[2-(1-aziridinyl)-1-oxoethoxy]methyl]-2-(hydroxymethyl)-1,3-propanediyl ester (CAS 2583876-75-7); or β-Alanine, N-[2-(1-aziridinyl)ethyl]-, 3-[3-(1-aziridinyl)-1-oxopropoxy]-2-(hydroxymethyl)-2-[[(1-oxo-2-propen-1-yl)oxy]methyl]propyl ester (CAS497092-87-2); of which 1-Aziridinepropanoic acid, 1,1'-[2-[[3-(1-aziridinyl)-1-oxopropoxy]methyl]-2-(hydroxymethyl)-1,3-propanediyl] ester is the preferred example.

In the context of the present invention, the one or multiple compounds containing one or multiple amine and/or hydroxyl functions that also contains one or multiple aziridine functional groups as additional functional group is added in an amount calculated as 0.05 to 0.95 equivalent (molar equivalents), regarding to the isocyanate functions that are not consumed in the formation of the polycarbodiimide chain.

In the context of the present invention, the molecular weight of the one or multiple compounds containing one or multiple amine and/or hydroxyl functions that also contains one or multiple aziridine functional groups is above 300 Dalton, and preferably within the range from 350 Dalton to 900 Dalton.
In the context of the present invention, the one or multiple compounds containing one or multiple amine and/or hydroxyl functions that also contains one or multiple aziridine functional groups contains two or more aziridine groups, and preferably between two and five aziridine groups. More aziridine groups per compound will have as a result that the total concentration of aziridine groups in the end product is higher. This is advantageous, because then a lower amount (in grams) of the compound when used as a crosslinker is needed due to the higher concentration of crosslinking groups. More aziridine groups per compound will also result in a higher molecular weight of the resulting polymer which may result in lower mobility into living cells, and hence less risk of genotoxicity.

The invention further relates to a coating mixture comprising the aziridine-functional polycarbodiimide obtainable by the process of the present invention as crosslinking agent and a polymer dispersed in water, which polymer contains carboxylic acid functions and which may contain a solvent. Examples of these polymers are polyurethanes, acrylate or methacrylate polymers or copolymers, polyvinylacetates, latexes.

Further, the coating mixture may contain organic solvents or conventional additives, such as emulsifiers, colorants, pigments, wetting agents, leveling agents, silicones, fillers, plasticizers, matting agents.

Finally the invention extends to the cured material and coated products obtained by applying the coating mixture to a substrate and evaporating the water and, if present, the solvent.

Suitable substrates to be coated are for example: leather, artificial leather, plastics such as polyurethanes, polyacrylates, polyethylene, polypropylene, PVC or polyester, paper, paper board, textile, non-woven, cloth, foam, wood, glass, metal, asphalt, stone, concrete.

The above described specific embodiments are all embodiments in accordance with the present invention. The various embodiments may be mutually combined. A feature described for one particular embodiment may be taken up, incorporated in or otherwise combined with other particular embodiments unless the laws of physics would forbid such combinations.

The present invention is further illustrated by the following examples.

### EXAMPLES

### Example 1:

Under a nitrogen atmosphere a mixture of 184 g of dicyclohexylmethane-4,4'-diisocyanate and 0.25 g of 1-methylphospholene-oxide was heated to 180 °C while stirring and heating was continued until a NCO-content of 11.9% was obtained corresponding to a desired theoretical amount of carbodiimide functions in the polymer of 2.0. The reaction time was 6 hrs. Then 100 g of propyleneglycol diacetate was added and the mixture was cooled to 90-100 °C. Then 169 g (corresponding to 0.86 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.) and 0.05 g of K-Kat 348 (a catalyst, commercially available from King Industries) were added and stirring was continued for an hour, followed by the addition of 66 g of MPEG-750 (a polyethylene glycol monomethyl ether with a mean molecular weight of 750 Dalton, commercially available as Polyglykol M 750 PU from Clariant GmbH) and 500 g of propyleneglycol diacetate. Stirring was continued for three hours at 120°C.

The non-volatile parts are 40 weight%, due to the emission of 21 g of CO₂ from the carbodiimide forming reaction.

The theoretical concentration of carbodiimide groups is 0.47 mmol/g. The theoretical concentration of aziridine groups is 1.19 mmol/g. The summed theoretical concentration of carbodiimide groups and aziridine groups is 1.66 mmol/g.

### Example 2:

Under a nitrogen atmosphere a mixture of 478 g of 3-isocyanatomethyl-3,5,5-trimethylcyclohexylisocyanate, 138 g of propyleneglycol diacetate and 1.7 g of 2,5-dihydro-3-methyl-1-phenyl-1H-phosphole 1-oxide was heated to 150 °C while stirring and heating was continued until a NCO-content of 10.8% was obtained corresponding to a desired theoretical amount of carbodiimide functions in the polymer of 2.0. The reaction time was 6 hrs. Then the mixture was cooled to 90-100 °C and 77 g (corresponding to 0.13 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.) and 0.08 g of K-Kat 348 (a catalyst, commercially available from King Industries) were added and stirring was continued for an hour, followed by the addition of 106 g of butylglycol, 98 g of MPEG-350 (a polyethylene glycol monomethyl ether with a mean molecular weight of 350 Dalton, commercially available as Polyglykol M 350 PU from Clariant GmbH) and 162 g of propyleneglycol diacetate. Stirring was continued for three hours at 120°C.

The non-volatile parts are 70 weight%, due to the emission of 63 g of CO₂ from the carbodiimide forming reaction.

The theoretical concentration of carbodiimide groups is 1.12 mmol/g. The theoretical concentration of aziridine groups is 0.43 mmol/g. The summed theoretical concentration of carbodiimide groups and aziridine groups is 1.55 mmol/g.

### Example 3:

Under a nitrogen atmosphere a mixture of 380 g of 3-isocyanatomethyl-3,5,5-trimethylcyclohexylisocyanate, 108 g of propyleneglycol diacetate and 1.4 g of 2,5-dihydro-3-methyl-1-phenyl-1H-phosphole 1-oxide was heated to 150 °C while stirring and heating was continued until a NCO-content of 8.3% was obtained corresponding to a desired theoretical amount of carbodiimide functions in the polymer of 3.0. The reaction time was 6 hrs. Then the mixture was cooled to 90-100 °C and 118 g (corresponding to 0.33 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.), 61 g of butylglycol, 95 g of MPEG-750 (a polyethylene glycol monomethyl ether with a mean molecular weight of 750 Dalton, commercially available as Polyglykol M 750 PU from Clariant GmbH) and 100 g of propyleneglycol diacetate and 0.09 g of K-Kat 348 (a catalyst, commercially available from King Industries) were added and stirring was continued for three hours at 120°C. Next, 192 g of propyleneglycol diacetate was added to the mixture.

The non-volatile parts are 60 weight%, due to the emission of 56 g of CO₂ from the carbodiimide forming reaction.

The theoretical concentration of carbodiimide groups is 1.16 mmol/g. The theoretical concentration of aziridine groups is 0.75 mmol/g. The summed theoretical concentration of carbodiimide groups and aziridine groups is 1.91 mmol/g.

### Example 4:

Under a nitrogen atmosphere a mixture of 382 g of 3-isocyanatomethyl-3,5,5-trimethylcyclohexylisocyanate, 108 g of propyleneglycol diacetate and 1.4 g of 2,5-dihydro-3-methyl-1-phenyl-1H-phosphole 1-oxide was heated to 150 °C while stirring and heating was continued until a NCO-content of 8.3% was obtained corresponding to a desired theoretical amount of carbodiimide functions in the polymer of 3.0. The reaction time was 6 hrs. Then the mixture was cooled to 90-100 °C and 123 g (corresponding to 0.34 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.), 50 g of propyleneglycol diacetate and 0.09 g of K-Kat 348 (a catalyst, commercially available from King Industries) were added and stirring was continued for one hour at 120°C. Next, 60 g of butylglycol, 90 g of MPEG-750 (a polyethylene glycol monomethyl ether with a mean molecular weight of 750 Dalton, commercially available as Polyglykol M 750 PU from Clariant GmbH) and 50 g of propyleneglycol diacetate were added and stirring was continued for three hours at 120°C, followed by adding 192 g of propyleneglycol diacetate to the mixture.

The non-volatile parts are 60 weight%, due to the emission of 57 g of CO₂ from the carbodiimide forming reaction.

The theoretical concentration of carbodiimide groups is 1.16 mmol/g. The theoretical concentration of aziridine groups is 0.78 mmol/g. The summed theoretical concentration of carbodiimide groups and aziridine groups is 1.94 mmol/g.

### Example 5:

Under a nitrogen atmosphere a mixture of 318 g of 3-isocyanatomethyl-3,5,5-trimethylcyclohexylisocyanate, 92 g of propyleneglycol diacetate and 1.2 g of 2,5-dihydro-3-methyl-1-phenyl-1H-phosphole 1-oxide was heated to 150 °C while stirring and heating was continued until a NCO-content of 10.8% was obtained corresponding to a desired theoretical amount of carbodiimide functions in the polymer of 2.0. The reaction time was 6 hrs. Then the mixture was cooled to 90-100°C and 191 g (corresponding to 0.47 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.), 50 g of propyleneglycol diacetate and 0.06 g of K-Kat 348 (a catalyst, commercially available from King Industries) were added and stirring was continued for one hour at 120°C. Next, 49 g of butylglycol, 82 g of MPEG-750 (a polyethylene glycol monomethyl ether with a mean molecular weight of 750 Dalton, commercially available as Polyglykol M 750 PU from Clariant GmbH) and 50 g of propyleneglycol diacetate were added and stirring was continued for three hours at 120°C, followed by adding 208 g of propyleneglycol diacetate to the mixture.

The non-volatile parts are 60 weight%, due to the emission of 42 g of CO₂ from the carbodiimide forming reaction.

The theoretical concentration of carbodiimide groups is 0.88 mmol/g. The theoretical concentration of aziridine groups is 1.23 mmol/g. The summed theoretical concentration of carbodiimide groups and aziridine groups is 2.11 mmol/g.

### Example 6:

Under a nitrogen atmosphere a mixture of 218 g of 3-isocyanatomethyl-3,5,5-trimethylcyclohexylisocyanate, 63 g of propyleneglycol diacetate and 0.8 g of 2,5-dihydro-3-methyl-1-phenyl-1H-phosphole 1-oxide was heated to 150 °C while stirring and heating was continued until a NCO-content of 10.8% was obtained corresponding to a desired theoretical amount of carbodiimide functions in the polymer of 2.0. The reaction time was 6 hrs. Then the mixture was cooled to 90-100°C and 240 g (corresponding to 0.87 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.), 50 g of propyleneglycol diacetate and 0.06 g of K-Kat 348 (a catalyst, commercially available from King Industries) were added and stirring was continued for one hour at 120°C. Next, 3 g of butylglycol, 66 g of MPEG-750 (a polyethylene glycol monomethyl ether with a mean molecular weight of 750 Dalton, commercially available as Polyglykol M 750 PU from Clariant GmbH) and 50 g of propyleneglycol diacetate were added and stirring was continued for three hours at 120°C, followed by adding 337 g of propyleneglycol diacetate to the mixture.

The non-volatile parts are 50 weight%, due to the emission of 29 g of CO₂ from the carbodiimide forming reaction.

The theoretical concentration of carbodiimide groups is 0.61 mmol/g. The theoretical concentration of aziridine groups is 1.57 mmol/g. The summed theoretical concentration of carbodiimide groups and aziridine groups is 2.18 mmol/g.

### Example 7:

Under a nitrogen atmosphere a mixture of 218 g of 3-isocyanatomethyl-3,5,5-trimethylcyclohexylisocyanate, 63 g of propyleneglycol diacetate and 0.8 g of 2,5-dihydro-3-methyl-1-phenyl-1H-phosphole 1-oxide was heated to 150 °C while stirring and heating was continued until a NCO-content of 10.8% was obtained corresponding to a desired theoretical amount of carbodiimide functions in the polymer of 2.0. The reaction time was 6 hrs. Then the mixture was cooled to 90-100°C and 264 g (corresponding to 0.87 equivalent) of 1-Aziridinepropanoic acid, 2-methyl-, 1,1'-[2-(hydroxymethyl)-2-[[3-(2-methyl-1-aziridinyl)-1-oxopropoxy] methyl]-1,3-propanediyl] ester (CAS 121366-89-0), 50 g of propyleneglycol diacetate and 0.06 g of K-Kat 348 (a catalyst, commercially available from King Industries) were added and stirring was continued for one hour at 120°C. Next, 3 g of butylglycol, 66 g of MPEG-750 (a polyethylene glycol monomethyl ether with a mean molecular weight of 750 Dalton, commercially available as Polyglykol M 750 PU from Clariant GmbH) and 50 g of propyleneglycol diacetate were added and stirring was continued for three hours at 120°C, followed by adding 337 g of propyleneglycol diacetate to the mixture.

The non-volatile parts are 50 weight%, due to the emission of 29 g of CO₂ from the carbodiimide forming reaction.
The theoretical concentration of carbodiimide groups is 0.58 mmol/g. The theoretical concentration of aziridine groups is 1.51 mmol/g. The summed theoretical concentration of carbodiimide groups and aziridine groups is 2.09 mmol/g.

### Example 8:

Under a nitrogen atmosphere a mixture of 218 g of 3-isocyanatomethyl-3,5,5-trimethylcyclohexylisocyanate, 63 g of propyleneglycol diacetate and 0.8 g of 2,5-dihydro-3-methyl-1-phenyl-1H-phosphole 1-oxide was heated to 150 °C while stirring and heating was continued until a NCO-content of 10.8% was obtained corresponding to a desired theoretical amount of carbodiimide functions in the polymer of 2.0. The reaction time was 6 hrs. Then the mixture was cooled to 90-100°C and 287 g (corresponding to 0.87 equivalent) of 1-Aziridinepropanoic acid, 2-ethyl-, 2-[[3-(2-ethyl-1-aziridinyl)-1-oxopropoxy]methyl]-2-(hydroxymethyl)-1,3-propanediyl ester (CAS 121366-97-8), 50 g of propyleneglycol diacetate and 0.06 g of K-Kat 348 (a catalyst, commercially available from King Industries) were added and stirring was continued for one hour at 120°C. Next, 3 g of butylglycol, 66 g of MPEG-750 (a polyethylene glycol monomethyl ether with a mean molecular weight of 750 Dalton, commercially available as Polyglykol M 750 PU from Clariant GmbH) and 50 g of propyleneglycol diacetate were added and stirring was continued for three hours at 120°C, followed by adding 337 g of propyleneglycol diacetate to the mixture.

The non-volatile parts are 50 weight%, due to the emission of 29 g of CO₂ from the carbodiimide forming reaction.

The theoretical concentration of carbodiimide groups is 0.55 mmol/g. The theoretical concentration of aziridine groups is 1.45 mmol/g. The summed theoretical concentration of carbodiimide groups and aziridine groups is 2.00 mmol/g.

### Example 9, comparative:

Under a nitrogen atmosphere a mixture of 272 g of Tolonate HDT-LV (an homopolymer of 1,6-hexyldiisocyanate, commercially available from Vencorex Chemicals), 208 g (corresponding to 0.34 equivalent) of 1-Aziridinepropanoic acid, 1,1'-[2-[[3-(1-aziridinyl)-1-oxopropoxy]methyl]-2-(hydroxymethyl)-1,3-propanediyl] ester (commercially available as CL-427, from Menadiona S.L.), 110 g of butylglycol, 109 g of MPEG-750 (a polyethylene glycol monomethyl ether with a mean molecular weight of 750 Dalton, commercially available as Polyglykol M 750 PU from Clariant GmbH), 300 g of propyleneglycol diacetate and 0.06 g of K-Kat 348 (a catalyst, commercially available from King Industries) was stirred for three hours at 120°C.

The non-volatile parts are 70 weight%.

The theoretical concentration of aziridine groups is 1.40 mmol/g.

### Example 10: genotoxicity test

The genotoxicity was measured by the ToxTracker^{®} assay (Toxys, Leiden, The Netherlands), which can be applied for pure substances or for compositions. The ToxTracker assay is a panel of six validated green fluorescent protein (GFP)-based mouse embryonic stem (mES) reporter cell lines that can be used to identify the biological reactivity and potential carcinogenic properties of newly developed compounds in a single test.

The six independent mES reporter cell lines were seeded in gelatin-coated 96-well cell culture plates in 200 µl mES cell medium (50.000 cells per well). 24 h after seeding the cells in the 96-well plates, medium was aspirated and fresh mES cell medium containing 10% fetal calf serum and the diluted chemical was added to the cells. For the tested material, five concentrations were tested in 2-fold dilutions. Induction of the GFP reporters was determined after 24 h exposure using a flow cytometer. Only GFP expression in intact single cells was determined. Mean GFP fluorescence was measured and used to calculate GFP reporter induction compared to a vehicle control treatment. Cytotoxicity was estimated by cell count after 24 h exposure using a flow cytometer and was expressed as percentage of intact cells after 24 h exposure compared to vehicle exposed controls. Metabolic activation was included in the ToxTracker assay by addition of S9 liver extract from aroclor1254-induced rats (Moltox). Cells were exposed to five concentrations of the test samples in the presence of 0.25% S9 and required co-factors (RegenSysA+B, Moltox) for 24 h.
Positive reference treatments with cisplatin (DNA damage), diethyl maleate (oxidative stress), tunicamycin (unfolded protein response) and aflatoxin B1 (metabolic activation of progenotoxins by S9) were included in all experiments. Solvent concentration was the same in all wells and never exceeded 1% for DMSO or ethanol. The ToxTracker assay was considered to have a positive response when a compound induces at least a 2 fold increase in GFP expression in any of the reporters. The ToxTracker assay contains two reporters for genotoxicity: Bscl2-GFP, which is activated upon formation of bulky DNA lesions and subsequent DNA replication stress and Rtkn-GFP, which is activated upon induction of DNA double strand breaks. Directly DNA reactive substances usually activate both markers for genotoxicity, while activation of only Rtkn-GFP is often observed for substances that are indirectly genotoxic due to oxidative damage or aneugenicity.

Exposure to 1-Aziridinepropanoic acid, 1,1'-[2-[[3-(1-aziridinyl)-1-oxopropoxy]methyl]-2-(hydroxymethyl)-1,3-propanediyl] (commercially available as CL-427, from Menadiona S.L.) activated the Bscl2-GFP and Rtkn-GFP reporter in absence and presence of S9. Exposure to the sample from Example 3 did not activate the Bscl2-GFP reporter. A weak activation of the Rtkn-GFP reporter (>1.5-fold), was observed in presence of S9, but the induction level did not pass the 2-fold threshold for a positive ToxTracker response.

Btg2-GFP, the reporter for p53 activation, was activated upon exposure to 1-Aziridinepropanoic acid, 1,1'-[2-[[3-(1-aziridinyl)-1-oxopropoxy]methyl]-2-(hydroxymethyl)-1,3-propanediyl] (commercially available as CL-427, from Menadiona S.L.) in absence and presence of S9. Exposure to the sample from Example 3 only weakly activated the Btg2-GFP reporter in presence of S9, but the induction level did not pass the 2-fold threshold for a positive ToxTracker response. The Btg2-GFP reporter is associated with activation of the p53 tumor suppressor, which can be activated by DNA damage as well as oxidative stress, heat shock, hypoxia or apoptosis.

These test results led to the conclusion that 1-Aziridinepropanoic acid, 1,1'-[2-[[3-(1-aziridinyl)-1-oxopropoxy]methyl]-2-(hydroxymethyl)-1,3-propanediyl] (commercially available as CL-427, from Menadiona S.L.) is considered genotoxic and that the sample from Example 3 is not considered genotoxic.

### Example 11:

Testing of the products from Examples 1 to 6 as crosslinker in a polyurethane dispersion with the product from Comparative Example 9 and commercial products as reference examples.

5 weight% of the products from Examples 1 to 6 and Comparative Example 9 were mixed with RU-3901 (a polyurethane dispersion commercially available from Stahl Europe BV) or with the top coat formulation WT-73-575 (a mixture comprising polyurethane dispersion, commercially available from Stahl Europe BV). In all cases first a 1:1 or 1:2 dilution in water was made and subsequently this dilution was mixed with RU-3901 or WT-73-575. In addition, several commercially available crosslinkers were also included as reference in the test series: XL-706 (2-ethyl-2-[[3-(2-methylaziridin-1-yl)propionyl]methyl]propane-1,3-diyl bis(2-methylaziridine-1-propionate; commercially available from Stahl Polymers), XL-702 (an aqueous polycarbodiimide crosslinker with 40% non-volatile content; commercially available from Stahl Polymers), XL-701 (a 'multifunctional' polycarbodiimide crosslinker with 50% non-volatile content; commercially available from Stahl Polymers) and NeoAdd Pax 523 (a multi-aziridine polymer, with 80% non-volatile content; commercially available from Covestro AG). XL-706 was added in amount of 1 weight% and 2 weight% instead of 5 weight%. Each dispersion was, with a thickness of 300 µm, applied on a glass sheet and the glass sheet with the applied film on it was dried for 1 day at room temperature and subsequently for 8 hours at 80 °C in an oven. Samples of the dried film were subjected to a solvent uptake test with water, ethanol or MEK (methylethylketone or 2-butanone) as solvent. In this test pieces of dried and weighted film are immersed into water, ethanol or MEK for half an hour and then the increase of the weight of the film is determined.

The weight increase in this solvent uptake test is a measure for the crosslinking in which a lower increase of weight indicates a higher degree of crosslinking. Further, the mechanical properties and the elongations of the films were measured with an Instron 5544A apparatus. The mechanical properties are a measure for the crosslinking in which a larger stress value at a certain strain indicates a higher degree of crosslinking. The results of the tests are presented in Table 1.

The results show that the crosslinking with the crosslinking agent of Examples 1 to 6 is of a comparable or higher degree compared to the reference commercial crosslinker products and comparative Example 9, which is demonstrated by the higher strain in the film which is obtained when the film is stretched by 100% (the M-100) and by the comparable weight increase when the films are immersed in water, ethanol or MEK.

The results demonstrate that the crosslinker agents of the present invention, which are non-genotoxic, give a similar or better crosslinking performance as the reference aziridine crosslinker agent XL-706, which is classified as mutagenic.

**Table 1**

| **Polyurethane resin / aqueous top coat** | **crosslinker** | **% of crosslinker** | **M100 (MPa)** | **weight increase MEK (%)** | **weight increase ethanol (%)** | **weight increase water (%)** |
|---|---|---|---|---|---|---|
| **RU-3901** | **Ref** | - | 3,2 | * | 453 | 4 |
| **RU-3901** | **XL-706** | 1,1 | 4,6 | 127 | 148 | 2,8 |
| **RU-3901** | **XL-706** | 2,0 | 4,8 | 138 | 176 | 3,4 |
| **RU-3901** | **XL-702** | 5,0 | 4,2 | 126 | 154 | 4,6 |
| **RU-3901** | **XL-701** | 5,0 | 5,2 | 145 | 199 | 3,7 |
| **RU-3901** | **NeoAdd Pax 523** | 5,0 | 3,9 | 140 | 179 | 3,4 |
| **RU-3901** | **Example 1** | 5,0 | 5,4 | 138 | 204 | 5,1 |
| **RU-3901** | **Example 2** | 5,0 | 4,4 | 140 | 188 | 3,2 |
| **RU-3901** | **Example 3** | 5,0 | 5,8 | 127 | 160 | 3,3 |
| **RU-3901** | **Example 4** | 5,0 | 5,5 | 127 | 164 | 3,1 |
| **RU-3901** | **Example 5** | 5,0 | - | 195 | 284 | 3,8 |
| **RU-3901** | **Example 6** | 5,0 | 5,1 | 125 | 204 | 3,5 |
| **RU-3901** | **Example 9 Comp** | 5,0 | 5,9 | 178 | 234 | 4,7 |
| **WT-73-575** | **Ref** | - | 6,4 | ** | 61 | 3,1 |
| **WT-73-575** | **XL-706** | 1,1 | 9,0 | 92 | 29 | 2,0 |
| **WT-73-575** | **XL-706** | 2,0 | 9,0 | 80 | 30 | 2,3 |
| **WT-73-575** | **XL-702** | 5,0 | 7,6 | 112 | 34 | 3,4 |
| **WT-73-575** | **XL-701** | 5,0 | 10,5 | 98 | 33 | 3,5 |
| **WT-73-575** | **NeoAdd Pax 523** | 5,0 | 7,6 | 90 | 34 | 3,4 |
| **WT-73-575** | **Example 1** | 5,0 | 9,2 | 154 | 35 | 3,2 |
| **WT-73-575** | **Example 2** | 5,0 | 9,9 | 86 | 31 | 1,1 |
| **WT-73-575** | **Example 3** | 5,0 | 10,2 | 90 | 33 | 3,8 |
| **WT-73-575** | **Example 4** | 5,0 | 11,0 | 87 | 31 | 2,0 |
| **WT-73-575** | **Example 5** | 5,0 | 11,0 | 99 | 33 | 2,3 |
| **WT-73-575** | **Example 6** | 5,0 | 11,1 | 100 | 29 | 2,7 |
| **WT-73-575** | **Example 9 Comp** | 5,0 | 7,4 | 72 | 29 | 1,7 |

| | | | | | | |
|---|---|---|---|---|---|---|
| a) MPa is megapascal (10⁶ Nm-²). The value at M100 is the strain of the film when it is stretched at 100%, *) Film was found to break upon exposure to MEK **) Film was found to degrade upon exposure to MEK yielding a snotty texture. | | | | | | |

### Example 12:

Testing of the products from Examples 1 to 6 as crosslinker in a polyurethane dispersion and the product from Comparative Example 9 and commercial products as reference examples was done similarly as in Example 11, but the amounts used were calculated such that an equal amount of mmoles of functional groups was dosed, wherein the mmoles of functional groups is the sum of the amount of carbodiimide groups and the amount of aziridine groups. The amount of crosslinker added was calculated such that about 7 mmol of functional groups of the crosslinker was dosed on 100 g of polyurethane resin or aqueous top coat. This corresponds to the use of 1% of XL-706, which is a usual amount for this crosslinker. The 2,0 mmol/g for reference product NeoAdd Pax 523 was calculated from the equivalent weight of 500 g per equivalent that is stated in its technical data sheet. The results are collected in Table 2. Because of the high concentration of functional groups in the Examples 1 to 6, only a relatively small amount of Examples 1 to 6 had to be dosed, compared to the reference polycarbodiimide crosslinkers XL-701 and XL-702, which contain a lower concentration of carbodiimide groups.

The results show that the crosslinking with the crosslinking agent of Examples 1 to 6 is of a comparable or higher degree as with the reference commercial crosslinker products and comparative Example 9, which is demonstrated by the higher strain in the film which is obtained when the film is stretched by 100% (the M-100) and by the comparable weight increase when the films are immersed in water, ethanol or MEK.

The results demonstrate that the crosslinker agents of the present invention, which are non-genotoxic, give a similar crosslinking performance as the reference aziridine crosslinker agent XL-706, which is classified as mutagenic.

**Table 2**

| Polyurethan e resin / aqueous top coat | crosslinker | mmol/g in product | % of crosslinker | mmol dosed | M100 (MPa) | weight increase MEK (%) | weight increase ethanol (%) | weight increas e water (%) |
|---|---|---|---|---|---|---|---|---|
| **RU-3901** | **Ref** | - | - | - | 3,2 | * | 453 | 4,0 |
| **RU-3901** | **XL-706** | 6,4 | 1,1 | 7,1 | 4,6 | 127 | 148 | 2,8 |
| **RU-3901** | **XL-702** | 0,7 | 10 | 7,0 | 5,1 | 126 | 154 | 4,6 |
| **RU-3901** | **XL-701** | 0,7 | 10 | 7,0 | 7,0 | 107 | 143 | 3,8 |
| **RU-3901** | **NeoAdd Pax 523** | 2,0 | 3,5 | 7,0 | 3,9 | 140 | 179 | 3,3 |
| **RU-3901** | **Example 1** | 1,66 | 4,2 | 7,0 | 4.7 | 170 | 231 | 6,0 |
| **RU-3901** | **Example 2** | 1,55 | 4,5 | 7,0 | 4,5 | 156 | 198 | 2,8 |
| **RU-3901** | **Example 3** | 1,91 | 3,7 | 7,1 | 5,2 | 139 | 182 | 3,0 |
| **RU-3901** | **Example 4** | 1,94 | 3,6 | 7,0 | 4,7 | 139 | 186 | 3,1 |
| **RU-3901** | **Example 5** | 2,11 | 3,3 | 7,0 | - | 180 | 259 | 3,6 |
| **RU-3901** | **Example 6** | 2,18 | 3,2 | 7,0 | 5.2 | 151 | 230 | 4,2 |
| **RU-3901** | **Example 9 Comp** | 1,4 | 5 | 7,0 | 3,8 | 178 | 234 | 4,7 |
| **WT-73-575** | **Ref** | - | - | - | 6,4 | ** | 61 | 3,1 |
| **WT-73-575** | **XL-706** | 6,4 | 1,1 | 7,1 | 9,0 | 92 | 29 | 2,0 |
| **WT-73-575** | **XL-702** | 0,7 | 10 | 7,0 | 8,9 | 77 | 30 | 3,5 |
| **WT-73-575** | **XL-701** | 0,7 | 10 | 7,0 | 14,7 | 54 | 31 | 3,7 |
| **WT-73-575** | **NeoAdd Pax 523** | 2,0 | 3,5 | 7,0 | 7,5 | 110 | 33 | 2,6 |
| **WT-73-575** | **Example 1** | 1,66 | 4,2 | 7,0 | 9,1 | 157 | 35 | 3,4 |
| **WT-73-575** | **Example 2** | 1,55 | 4,5 | 7,0 | 9,8 | 89 | 32 | 1,6 |
| **WT-73-575** | **Example 3** | 1,91 | 3,7 | 7,1 | 9,7 | 101 | 33 | 3,1 |
| **WT-73-575** | **Example 4** | 1,94 | 3,6 | 7,0 | 10,3 | 97 | 32 | 1,1 |
| **WT-73-575** | **Example 5** | 2,11 | 3,3 | 7,0 | 9,0 | 117 | 33 | 1,7 |
| **WT-73-575** | **Example 6** | 2,18 | 3,2 | 7,0 | 9,3 | 127 | 30 | 3,3 |
| **WT-73-575** | **Example 9 Comp** | 1,4 | 5,0 | 7,0 | 7,1 | 174 | 37 | 3,5 |

| | | | | | | | | |
|---|---|---|---|---|---|---|---|---|
| a) MPa is megapascal (10⁶ Nm⁻²). The value at M100 is the strain of the film when it is stretched at 100%. b) 'mmol/g in product' is the sum of the amount of carbodiimide groups and the amount of aziridine groups, expressed in mmol/g. c) 'mmol dosed' is the amount of crosslinker dosed, in grams, times the 'mmol/g in product' when calculated to be used on 100 g of polyurethane resin or aqueous top coat. *) Film was found to break upon exposure to MEK **) Film was found to degrade upon exposure to MEK yielding a snotty texture. | | | | | | | | |

## Claims

1. A process for the preparation of aziridine-functional polycarbodiimides comprising the steps of:
i) the reaction of polyisocyanates or a mixture of mono- and polyisocyanates at 80 - 200 °C in the presence of 0.02 - 5 weight percentage of a carbodiimide catalyst, in which an isocyanate functional polycarbodiimide, optionally in admixture with a polycarbodiimide, is formed with a mean value of 1 - 10 carbodiimide functions; and
ii) terminating and/or chain extending the isocyanate functional polycarbodiimide chain, during or after the formation of the polycarbodiimide chain, by the addition of 0.05 to 0.95 equivalent, regarding to the isocyanate functions that are not consumed in the formation of the polycarbodiimide chain, with a first compound containing a hydrophilic group and one or multiple amine and/or hydroxyl functions, together with, prior to, or followed by reacting the remaining isocyanate functions with one or multiple second compounds containing one or multiple amine and/or hydroxyl functions,
in which 0 to 60 weight% of an organic solvent and/or 0 to 50 weight% of a plasticizer, and/or 0 to 30 weight% of surface active component is added during, before or after the carbodiimide forming reaction and/or the terminating reaction and/or the chain extending reaction,
wherein at least one of the second compounds containing one or more amine and/or hydroxyl functions also contains one or multiple aziridine functional groups as additional functional group and is an ester of one or more 1-Aziridinealkanoic acid moieties or derivatives thereof.

2. A process according to claim 1, wherein the second compound containing one or more amine and/or hydroxyl functions and that also contains one or multiple aziridine functional groups as additional functional group has a molecular weight of above 300 Dalton, and preferably within the range from 350 Dalton to 900 Dalton.

3. A process according to claim 1 or 2, wherein the second compound containing one or more amine and/or hydroxyl functions and that also contains one or multiple aziridine functional groups as additional functional group is added in an amount calculated as 0.05 to 0.95 equivalent, regarding to the isocyanate functions that are not consumed in the formation of the polycarbodiimide chain.

4. A process according to claim 1 to 3, wherein the second compound containing one or multiple amine and/or hydroxyl functions and that also contains one or multiple aziridine functional groups contains two or more aziridine groups, and preferably between two and five aziridine groups.

5. A process according to claim 1 to 4, wherein the second compound containing one or multiple amine and/or hydroxyl functions and that also contains one or multiple aziridine functional groups belongs to the groups of 1-Aziridinealkanoic acid, 1,1'-[2-[[3-(1-aziridinyl)-1-oxoalkoxy]alkyl]-2-(hydroxyalkyl)-α,ω-alkanediyl] ester or its derivatives.

6. A process according to any of claims 1 to 4, wherein the second compound containing one or multiple amine and/or hydroxyl functions and that also contains one or multiple aziridine functional groups is selected from the group consisting of: 1-Aziridinepropanoic acid, 1,1'-[2-[[3-(1-aziridinyl)-1-oxopropoxy]methyl]-2-(hydroxymethyl)-1,3-propanediyl] ester; 1-Aziridineacetic acid, α-methyl-, 2-[[2-(1-aziridinyl)-1-oxopropoxy]methyl]-2-(hydroxymethyl)-1,3-propanediyl ester; 1-Aziridinepropanoic acid, 2-ethyl-, 2-[[3-(2-ethyl-1-aziridinyl)-1-oxopropoxy]methyl]-2(hydroxymethyl)-1,3-propanediyl ester; 1-Aziridinepropanoic acid, 2,2-dimethyl-, 2-[[3(2,2-dimethyl-1-aziridinyl)-1-oxopropoxy]ethyl]-2-(hydroxymethyl)-1,3-propanediyl ester; 1-Aziridinepropanoic acid, 2-methyl-, 1,1'-[2-(hydroxymethyl)-2-[[3-(2-methyl-1-aziridinyl)-1-oxopropoxy]methyl]-1,3-propanediyl] ester; 1-Aziridinepropanoic acid, 2-methyl-, 2-[[3-hydroxy-2,2-bis[[3-(2-methyl-1-aziridinyl)-1-oxopropoxy]methyl]propoxy]methyl]-2-[[3-(2-methyl-1-aziridinyl)-1-oxopropoxy]methyl]-1,3-propanediyl ester; 1-Aziridinepropanoic acid, 2-propyl-, 2-(hydroxymethyl)-2-[[1-oxo-3-(2-propyl-1-aziridinyl)propoxy]methyl]-1,3-propanediyl ester; 1-Aziridinepropanoic acid, 2-[[3-(1-aziridinyl)-1-oxopropoxy]methyl]-2-(2-hydroxyethyl)-1,3-propanediyl ester; 1-Aziridinepropanoic acid, 2-methyl-, 2-(2-hydroxyethyl)-2-[[3-(2-methyl-1-aziridinyl)-1-oxopropoxy]methyl]-1,3-propanediyl ester; 1-Aziridinepropanoic acid, 2-methyl-, 1,1'-[2-[[3-[3-(1-aziridinyl)-1-oxopropoxy]-2-(hydroxymethyl)-2-[[3-(2-methyl-1-aziridinyl)-1-oxopropoxy]methyl]propoxy]methyl]-2-[[3-(2methyl-1-aziridinyl)-1-oxopropoxy]methyl]-1,3-propanediyl] ester; 1-Aziridinebutanoic acid, 1,1'-[2-[[3-(1-aziridinyl)-1-oxobutoxy]methyl]-2-(hydroxymethyl)-1,3-propanediyl] ester; 1-Aziridineacetic acid, 2-[[2-(1-aziridinyl)-1-oxoethoxy]methyl]-2-(hydroxymethyl)-1,3-propanediyl ester; β-Alanine, N-[2-(1-aziridinyl)ethyl]-, 3-[3-(1-aziridinyl)-1-oxopropoxy]-2-(hydroxymethyl)-2-[[(1-oxo-2-propen-1-yl)oxy]methyl]propyl ester; and mixtures thereof.

7. A process according to claim 6, wherein the second compound containing one or multiple amine and/or hydroxyl functions and that also contains one or multiple aziridine functional groups is selected from the group consisting of: 1-Aziridinepropanoic acid, 1,1'-[2-[[3-(1-aziridinyl)-1-oxopropoxy]methyl]-2-(hydroxymethyl)-1,3-propanediyl] ester, 1-Aziridinepropanoic acid, 2-ethyl-, 2-[[3-(2-ethyl-1-aziridinyl)-1-oxopropoxy] methyl]-2-(hydroxymethyl)-1,3-propanediyl ester and 1-Aziridinepropanoic acid, 2-methyl-, 1,1'-[2-(hydroxymethyl)-2-[[3-(2-methyl-1-aziridinyl)-1-oxopropoxy]methyl]-1,3-propanediyl] ester.

8. A process according to any of claims 1 to 7, wherein at least one of one or the multiple first and second compounds containing one or multiple amine and/or hydroxyl functions is a compound that contains one or multiple further reactive groups other than aziridine with a reactivity towards corresponding functional groups comprised in a polymer, for example by self-condensation or self-addition.

9. A process according to any of claims 1 to 8, wherein the second compound that contains one or multiple amine and/or hydroxyl functions contains an additional reactive functional group which is a halogen; alkenyl; arylalkene; alkynyl; arylalkyn; alkadiene; aldehyde; dialkylacetal; dithioacetal; ketone; unsaturated aldehyde; ketone or carboxylic ester; nitrile; imine; alkylalkoxy silane; alkoxysilane; anhydride; mixed anhydride; oxime-protected diisocyanate; diketone; ketoester; thioketoester; ketothioester; thioketothioester; or a reactive ring system, or a mixture of one or multiple of such reactive groups.

10. A process according to any of claims 1 to 9, wherein the first compound containing an hydrophilic group and one or multiple amine and/or hydroxyl functions is a polyethoxy mono- or diol with a molecular weight between 100 and 3000 Dalton, a polyethoxy/polypropoxy mono- or diol with a molecular weight between 100 and 3000 Dalton and an ethoxy/propoxy ratio between 100/0 and 25/75, a polyethoxy mono- or diamine with a molecular weight between 100 and 3000, a polyethoxy/polypropoxy mono- or diamine with a molecular weight between 100 and 3000 Dalton and an ethoxy/propoxy ratio between 100/0 and 25/75, a diol or diamine containing a pendant polyalkoxy chain, an hydroxyl- or amine alkylsulphonate, or a dialkylamino-alkyl- alcohol or amine, or a mixture thereof.

11. A process according to any of claims 1 to 10, wherein the polyisocyanate is 3-isocyanatomethyl-3,5,5-trimethylcyclohexylisocyanate, 1,6-hexyldiisocyanate, 1,5-pentyldiisocyanate or dicyclohexyl-methane-4,4'-diisocyanate, or mixtures thereof.

12. A process according to any of claims 1 to 11 wherein the aziridine-functional carbodiimide is not genotoxic.

13. An aziridine-functional polycarbodiimide obtainable by the process as defined in any one of the preceding claims.

14. A coating mixture comprising the aziridine-functional polycarbodiimide according to claim 13 as crosslinking agent and a polymer dispersed in water, which polymer contains carboxylic acid functions.

15. Cured material obtained by applying the coating mixture of claim 14 to a substrate, and evaporating the water and, if present, a further solvent.

16. A coated product comprising a coating of the cured material according to claim 15.

## Patentansprüche

1. Verfahren zur Herstellung von Polycarbodiimiden mit Aziridinfunktion, umfassend die Schritte von:
i) Reaktion von Polyisocyanaten oder eines Gemischs aus Mono- und Polyisocyanaten bei 80-200 °C unter Anwesenheit von 0,02-5 Gew.-% eines Carbodiimid-Katalysators, bei der ein Polycarbodiimid mit Isocyanatfunktion, optional unter Beimischung eines Polycarbodiimids, mit einem Mittelwert von 1 -10 Carbodiimidfunktionen gebildet wird; und
ii) Beenden und/oder Verlängern der Polycarbodiimidkette mit Isocyanatfunktion, während oder nach der Bildung der Polycarbodiimidkette, durch Zugabe von 0,05 bis 0,95 Äquivalent, bezogen auf die Isocyanatfunktionen, die bei der Bildung der Polycarbodiimidkette nicht verbraucht werden, mit einer ersten Verbindung, enthaltend eine hydrophile Gruppe und eine oder mehrere Amin- und/oder Hydroxylfunktionen, zusammen mit, vor, oder gefolgt von der Reaktion der verbleibenden Isocyanatfunktionen mit einer oder mehreren zweiten Verbindungen, enthaltend eine oder mehrere Amin- und/oder Hydroxylfunktionen,
wobei 0 bis 60 Gew.-% eines organischen Lösungsmittels und/oder 0 bis 50 Gew.-% eines Weichmachers, und/oder 0 bis 30 Gew.-% der oberflächenaktiven Komponente während, vor oder nach der Carbodiimidbildungsreaktion und/oder der Abschlussreaktion und/oder der Kettenverlängerungsreaktion hinzugefügt werden,
wobei mindestens eine der zweiten Verbindungen, enthaltend eine oder mehrere Amin- und/oder Hydroxylfunktionen, auch eine oder mehrere Aziridin-funktionelle Gruppen als zusätzliche funktionelle Gruppe enthält und ein Ester eines oder mehrerer 1-Aziridinalkansäure- Teile oder Derivate davon ist.

2. Verfahren nach Anspruch 1, wobei die zweite Verbindung, die eine oder mehrere Amin- und/oder Hydroxylfunktionen enthält und die auch eine oder mehrere Aziridin-funktionelle Gruppen als zusätzliche funktionelle Gruppe enthält, ein Molekulargewicht von über 300 Dalton, und vorzugsweise innerhalb des Bereichs von 350 Dalton bis 900 Dalton hat.

3. Verfahren nach Anspruch 1 oder 2, wobei die zweite Verbindung, die eine oder mehrere Amin- und/oder Hydroxylfunktionen enthält und die auch eine oder mehrere Aziridin-funktionelle Gruppen als zusätzliche funktionelle Gruppe enthält, in einer Menge hinzugefügt wird, berechnet als 0,05 bis 0,95 Äquivalent, bezogen auf die Isocyanatfunktionen, die bei der Bildung der Polycarbodiimidkette nicht verbraucht werden.

4. Verfahren nach Anspruch 1 bis 3, wobei die zweite Verbindung, die eine oder mehrere Amin- und/oder Hydroxylfunktionen enthält, und die auch eine oder mehrere Aziridin-funktionelle Gruppen enthält, zwei oder mehr Aziridingruppen enthält, und vorzugsweise zwischen zwei und fünf Aziridingruppen.

5. Verfahren nach Anspruch 1 bis 4, wobei die zweite Verbindung, die eine oder mehrere Amin- und/oder Hydroxylfunktionen enthält, und die auch eine oder mehrere Aziridin-funktionelle Gruppen enthält, zu den Gruppen von 1-Aziridinalkansäure, 1,1'-[2-[[3-(1-Aziridinyl)-1-oxoalkoxy]alkyl]-2-(hydroxyalkyl)-α,ω-alkanediyl]-ester oder deren Derivaten gehört.

6. Verfahren nach einem der Ansprüche 1 bis 4, wobei die zweite Verbindung, die eine oder mehrere Amin- und/oder Hydroxylfunktionen enthält und die auch eine oder mehrere Aziridin-funktionelle Gruppen enthält, ausgewählt aus der Gruppe, bestehend aus: 1-Aziridinpropansäure, 1,1'-[2-[[3-(1-Aziridinyl)-1-oxopropoxy]methyl]-2-(hydroxymethyl)-1,3-propandiyl]-ester; 1-Aziridinessigsäure, α-Methyl-,2-[[2-(1-aziridinyl)-1-oxopropoxy]methyl]-2-(hydroxymethyl)-1,3-propandiylester; 1-Aziridinpropansäure, 2-Ethyl-,2-[[3-(2-ethyl-1-aziridinyl)-1-oxopropoxy]methyl]-2(hydroxymethyl)-1,3-propandiylester; 1-Aziridinpropansäure, 2,2-Dimethyl-,2-[[3(2,2-dimethyl-1-aziridinyl)-1-oxopropoxy]ethyl]-2-(hydroxymethyl)-1,3-propandiylester; 1-Aziridinpropansäure, 2-Methyl-,1,1'-[2-(hydroxymethyl)-2-[[3-(2-methyl-1-aziridinyl)-1-oxopropoxy]methyl]-1,3-propandiyl]-ester; 1-Aziridinpropansäure, 2-Methyl-,2-[[3-hydroxy-2,2-bis[[3-(2-methyl-1-aziridinyl)-1-oxopropoxy]methyl]propoxy]methyl]-2-[[3-(2-methyl-1-aziridinyl)-1-oxopropoxy]methyl]-1,3-propandiylester; 1-Aziridinpropansäure, 2-Propyl-,2-(hydroxymethyl)-2-[[1-oxo-3-(2-propyl-1-aziridinyl)propoxy]methyl]-1,3-propandiylester; 1-Aziridinpropansäure, 2-[[3-(1-Aziridinyl)-1-oxopropoxy]methyl]-2-(2-hydroxyethyl)-1,3-propandiylester; 1-Aziridinpropansäure, 2-Methyl-,2-(2-hydroxyethyl)-2-[[3-(2-methyl-1-aziridinyl)-1-oxopropoxy]methyl]-1,3-propandiylester; 1-Aziridinpropansäure, 2-Methyl-,1,1'-[2-[[3-[3-(1-aziridinyl)-1-oxopropoxy]-2-(hydroxymethyl)-2-[[3-(2-methyl-1-aziridinyl)-1-oxopropoxy]methyl]propoxy]methyl]-2-[[3-(2methyl-1-aziridinyl)-1-oxopropoxy]methyl]-1,3-propandiyl]-ester; 1-Aziridinbutansäure, 1,1'-[2-[[3-(1-Aziridinyl)-1-oxobutoxy]methyl]-2-(hydroxymethyl)-1,3-propandiyl]-ester; 1-Aziridinessigsäure, 2-[[2-(1-Aziridinyl)-1-oxoethoxy]methyl]-2-(hydroxymethyl)-1,3-propandiylester; β-Alanin, N-[2-(1-Aziridinyl)ethyl]-,3-[3-(1-aziridinyl)-1-oxopropoxy]-2-(hydroxymethyl)-2-[[(1-oxo-2-propen-1-yl)oxy]methyl]-propylester; und Gemische davon.

7. Verfahren nach Anspruch 6, wobei die zweite Verbindung, die eine oder mehrere Amin- und/oder Hydroxylfunktionen enthält und die auch eine oder mehrere Aziridin- funktionelle Gruppen enthält, ausgewählt aus der Gruppe bestehend aus: 1-Aziridinpropansäure, 1,1'-[2-[[3-(1-Aziridinyl)-1-oxopropoxy]methyl]-2-(hydroxymethyl)-1,3-propandiyl]-ester, 1-Aziridinpropansäure, 2-Ethyl-, 2-[[3-(2-ethyl-1-aziridinyl)-1-oxopropoxy]-methyl]-2-(hydroxymethyl)-1,3-propandiylester und 1-Aziridinpropansäure, 2-Methyl-,1,1'-[2-(hydroxymethyl)-2-[[3-(2-methyl-1-aziridinyl)-1-oxopropoxy]methyl]-1,3-propandiyl]-ester.

8. Verfahren nach einem der Ansprüche 1 bis 7, wobei mindestens eine von einer oder den mehreren ersten und zweiten Verbindungen, enthaltend eine oder mehrere Amin- und/oder Hydroxylfunktionen, eine Verbindung ist, die eine oder mehrere weitere reaktive Gruppen abweichend von Aziridin mit einer Reaktivität gegenüber entsprechenden funktionellen Gruppen, umfasst in einem Polymer, beispielsweise durch Selbstkondensation oder Selbstaddition, enthält.

9. Verfahren nach einem der Ansprüche 1 bis 8, wobei die zweite Verbindung, die eine oder mehrere Amin- und/oder Hydroxylfunktionen enthält, eine zusätzliche reaktive funktionelle Gruppe enthält, die ein Halogen; Alkenyl; Arylalken; Alkynyl; Arylalkyn; Alkadien; Aldehyd; Dialkylacetal; Dithioacetal; Keton; ungesättigtes Aldehyd; Keton oder Carboxylester; Nitril; Imin; Alkylalkoxysilan; Alkoxysilan; Anhydrid; gemischtes Anhydrid; oximgeschütztes Diisocyanat; Diketon; Ketoester; Thioketoester; Ketothioester; Thioketothioester; oder ein reaktives Ringsystem oder ein Gemisch aus einer oder mehreren solcher reaktiven Gruppen ist.

10. Verfahren nach einem der Ansprüche 1 bis 9, wobei die erste Verbindung, die eine hydrophile Gruppe und eine oder mehrere Amin- und/oder Hydroxylfunktionen enthält, ein Polyethoxymono- oder -diol mit einem Molekulargewicht zwischen 100 und 3000 Dalton, ein Polyethoxy-/Polypropoxymono- oder -diol mit einem Molekulargewicht zwischen 100 und 3000 Dalton und einem Ethoxy-/Propoxy-Verhältnis zwischen 100/0 und 25/75, ein Polyethoxymono- oder -diamin mit einem Molekulargewicht zwischen 100 und 3000, ein Polyethoxy-/Polypropoxymono- oder -diamin mit einem Molekulargewicht zwischen 100 und 3000 Dalton und einem Ethoxy-/Propoxy-Verhältnis zwischen 100/0 und 25/75, ein Diol oder Diamin, das eine anhängige Polyalkoxykette, ein Hydroxyl- oder Aminalkylsulfonat oder einen Dialkylaminoalkylalkohol oder ein -amin oder ein Gemisch davon, enthält.

11. Verfahren nach einem der Ansprüche 1 bis 10, wobei das Polyisocyanat 3-Isocyanatomethyl-3,5,5-trimethylcyclohexylisocyanat, 1,6-Hexyldiisocyanat, 1,5-Pentyldiisocyanat oder Dicyclohexyl-methan-4,4'-diisocyanatist oder Gemische davon.

12. Verfahren nach einem der Ansprüche 1 bis 11, wobei das Carbodiimid mit Aziridinfunktion nicht gentoxisch ist.

13. Polycarbodiimid mit Aziridinfunktion, erhältlich durch das Verfahren, wie in einem der vorhergehenden Ansprüche definiert.

14. Beschichtungsgemisch, umfassend das Polycarbodiimid mit Aziridinfunktion nach Anspruch 13 als Vernetzungsmittel und ein in Wasser dispergiertes Polymer, wobei das Polymer Carboxylsäurefunktionen enthält.

15. Ausgehärtetes Material, erhalten durch Auftragen der Beschichtungsmischung nach Anspruch 14 auf ein Substrat und Verdampfen des Wassers und, falls vorhanden, eines weiteren Lösungsmittels.

16. Beschichtetes Produkt, umfassend eine Beschichtung des ausgehärteten Materials nach Anspruch 15.

## Revendications

1. Un procédé de préparation de polycarbodiimides à fonction aziridine comprenant les étapes consistant à :
i) la réaction de polyisocyanates ou d'un mélange de mono-et polyisocyanates à 80 à 200°C en présence de 0,02 à 5% en poids d'un catalyseur carbodiimide, dans lequel un polycarbodiimide à fonction isocyanate, éventuellement en mélange avec un polycarbodiimide, est formé avec une valeur moyenne de 1 à 10 fonctions carbodiimide; et
ii) la terminaison et/ou l'extension de chaîne de la chaîne de polycarbodiimide à fonctionnalité isocyanate, pendant ou après la formation de la chaîne de polycarbodiimide, par l'addition de 0,05 à 0,95 équivalent, concernant les fonctions isocyanates qui ne sont pas consommées lors de la formation de la chaîne de polycarbodiimide, avec un premier composé contenant un groupe hydrophile et une ou plusieurs fonctions amine et/ou hydroxyle, conjointement avec, avant, ou après par la réaction des fonctions isocyanates restantes avec un ou plusieurs seconds composés contenant une ou plusieurs fonctions amine et/ou hydroxyle,
dans lequel de 0 à 60% en poids d'un solvant organique et/ou de 0 à 50% en poids d'un plastifiant, et/ou 0 à 30% en poids d'un composant tensioactif de surface sont ajoutés pendant, avant ou après la réaction de formation du carbodiimide et/ou la réaction de terminaison et/ou la réaction d'extension de chaîne,
dans lequel au moins l'un des seconds composés contenant une ou plusieurs fonctions amine et/ou hydroxyle contient également un ou plusieurs groupes fonctionnels d'aziridine en tant que groupe(s) fonctionnel(s) supplémentaire(s) et qui est un ester d'une ou de plusieurs fractions d'acide 1-aziridinealcanoïque ou de leurs dérivés.

2. Un procédé selon la revendication 1, dans lequel le second composé contenant une ou plusieurs fonctions amine et/ou hydroxyle et qui contient également un ou plusieurs groupes fonctionnels aziridines en tant que groupe(s) fonctionnel(s) supplémentaire(s) présentant un poids moléculaire supérieur à 300 Dalton, et de préférence dans la plage de 350 Daltons à 900 Daltons.

3. Un procédé selon la revendication 1 ou 2, dans lequel le second composé contenant une ou plusieurs fonctions amines(s) et/ou hydroxyle(s) et qui contient également un ou plusieurs groupes fonctionnels aziridines en tant que groupe(s) fonctionnel(s) supplémentaire(s) est ajouté en une quantité calculée consistant en 0,05 à 0,95 équivalent, concernant les fonctions isocyanates qui ne sont pas consommées dans la formation de la chaîne de polycarbodiimide.

4. Un procédé selon la revendication 1 à 3, dans lequel le second composé contenant une ou plusieurs fonctions amine et/ou hydroxyle et qui contient également un ou plusieurs groupes fonctionnels aziridine contient deux groupes aziridine ou plus, et de préférence entre deux et cinq groupes aziridine.

5. Un procédé selon les revendications 1 à 4, dans lequel le deuxième composé contenant une ou plusieurs fonctions amine et/ou hydroxyle et qui contient également un ou plusieurs groupe(s) fonctionnel(s) aziridine(s) appartient aux groupes des esters de 1,1'-[2-[[3-(1-aziridinyl)-1-oxoalcoxy]alkyl]-2-(hydroxyalkyl)-α,ω-alcanediyl] d'acide 1-aziridinealcanoïque ou ses dérivés.

6. Un procédé selon l'une quelconque des revendications 1 à 4, dans lequel le deuxième composé contenant une ou plusieurs fonctions amine et/ou hydroxyle et qui contient également un ou plusieurs groupes fonctionnels aziridine est choisi dans le groupe constitué par: l'ester de 1,1'-[2-[[3-(1-aziridinyl)-1-oxopropoxy]méthyl]-2-(hydroxyméthyl)-1,3-propanediyl] de l'acide 1-aziridinepropanoïque; l'ester α-méthylique de 2-[[2-(1-aziridinyl)-1-oxopropoxy]méthyl]-2-(hydroxyméthyl)-1,3-propanediyle de l'acide 1-aziridine-acétique; l'ester 2-éthylique de 2-[[3-(2-éthyl-1-aziridinyl)-1-oxopropoxy]méthyl]-2(hydroxyméthyl)-1,3-propanediyle de l'acide 1-aziridinepropanoïque; l'ester 2,2-diméthylique de 2-[[3(2,2-diméthyl-1-aziridinyl)-1-oxopropoxy]éthyl]-2-(hydroxyméthyl)-1,3-propanediyl de l'acide 1-aziridinepropanoïque ; l'ester 2-méthylique de 1,1'-[2-(hydroxyméthyl)-2-[[3-(2-méthyl-1-aziridinyl)-1-oxopropoxy]méthyl]-1,3-propanediyl] de l'acide 1-aziridinepropanoïque; l'ester 2-méthylique de 2-[[3-hydroxy-2,2-bis [[3-(2-méthyl-1-aziridinyl)-1-oxopropoxy ]méthyl]propoxy]méthyl]-2-[[3-(2-méthyl-1-aziridinyl)-1-oxopropoxy]méthyl]-1,3-propanediyle de l'acide 1-aziridinepropanoïque; l'ester 2-propylique de 2-(hydroxyméthyl)-2-[[1-oxo-3-(2-propyl-1-aziridinyl)propoxy] méthyl]-1,3-propanediyle de l'acide 1-aziridinepropanoïque; l'ester 2-[[3-(1-aziridinyl)-1-oxopropoxy]méthyl]-2-(2-hydroxyéthyl)-1,3-propanediyle de l'acide 1-aziridinepropanoïque; l'ester 2-méthylique de 2-(2-hydroxyéthyl)-2-[[3-(2-méthyl-1-aziridinyl)-1-oxopropoxy]méthyl]-1,3-propanediyle de l'acide 1-aziridinepropanoïque; l'ester 2-méthylique de 1,1'-[2-[[3-[3-(1-aziridinyl)-1-oxopropoxy]-2-(hydroxyméthyl)-2-[[3-(2-méthyl-1-aziridinyl)-1-oxopropoxy]méthyl]-propoxy]méthyl]-2-[[3-(2-méthyl-1-aziridinyl)-1-oxopropoxy]méthyl]1,3-propanediyl] de l'acide 1-aziridinepropanoïque; l'ester de 1,1'-[2-[[3-(1-aziridinyl)-1-oxobutoxy]méthyl]-2-(hydroxyméthyl)-1,3-propanediyl] de l'acide 1-aziridinebutanoïque; l'ester de 2-[[2-(1-aziridinyl)-1-oxoéthoxy]méthyl]-2-(hydroxyméthyl)-1,3-propanediyle de l'acide 1-aziridineacétique; la N-[2-(1-aziridinyl)éthyl]-, l'ester de 3-[3-(1-aziridinyl)-1-oxopropoxy]-2-(hydroxyméthyl)-2-[[(1-oxo-2-propén-1-yl)oxy]méthyl]propyle de la beta-alanine; et des mélanges de ceux-ci.

7. Un procédé selon la revendication 6, dans lequel le second composé contenant une ou plusieurs fonctions amine et/ou hydroxyle et qui contient également un ou plusieurs groupes fonctionnels aziridine est choisi dans le groupe constitué par: l'ester 1, 1'-[2-[[3-(1-aziridinyl)-1-oxopropoxy] méthyl]-2-(hydroxyméthyl)-1,3-propanediyl de l'acide 1-aziridinepropanoïque] ; l'ester 2-éthylique- de 2-[[3-(2-éthyl-1-aziridinyl)-1-oxopropoxy] méthyl]-2-(hydroxyméthyl)-1,3-propanediyle de l'acide 1-aziridinepropanoïque et l'ester 2-méthylique- de 1,1'-[2-(hydroxyméthyl)-2-[[3-(2-méthyl-1-aziridinyl)-1-oxopropoxy] méthyl]-1,3-propanediyl] de l'acide 1-aziridinepropanoïque.

8. Un procédé selon l'une quelconque des revendications 1 à 7, dans lequel au moins l'un d'un ou des multiples premier et second composés contenant une ou plusieurs fonctions amine et/ou hydroxyle est un composé qui contient un ou plusieurs autres groupes réactifs autres que l'aziridine avec une réactivité vers des groupes fonctionnels correspondants compris dans un polymère, par exemple par autocondensation ou autoaddition.

9. Un procédé selon l'une quelconque des revendications 1 à 8, dans lequel le second composé qui contient une ou plusieurs fonctions amine(s) et/ou hydroxyle(s) contient un groupe fonctionnel réactif supplémentaire qui est un halogène; alcényle; arylalcènyle; alcynyle; arylalcynyle; alcadiène; aldéhyde; dialkylacétal; dithioacétal; cétone; aldéhyde insaturé; cétone ou ester carboxylique; nitrile; imine; alkylalcoxysilane; alcoxysilane; anhydride; anhydride mixte; diisocyanate protégé par oxime; dicétone; cétoester; thiocétoester; cétothioester; thiocétothioester; ou un système cyclique réactif, ou un mélange d'un ou plusieurs de tels groupes réactifs.

10. Un procédé selon l'une quelconque des revendications 1 à 9, dans lequel le premier composé contenant un groupe hydrophile et une ou plusieurs fonction(s) amine(s) et/ou hydroxyle(s) est un polyéthoxy mono- ou diol ayant un poids moléculaire entre 100 et 3000 Dalton, un polyéthoxy/polypropoxy mono- ou diol avec un poids moléculaire entre 100 et 3000 Dalton et un rapport éthoxy/propoxy entre 100/0 et 25/75, une polyéthoxy mono- ou diamine avec un poids moléculaire entre 100 et 3000, une polyéthoxy/polypropoxy mono- ou diamine présentant un poids moléculaire entre 100 et 3000 Dalton et un rapport éthoxy/propoxy entre 100/0 et 25/75, un diol ou une diamine contenant une chaîne polyalcoxy pendante, un alkylsulfonate d'hydroxyle ou d'amine, ou un dialkylamino-alkyl-alcool ou une amine, ou un mélange de ceux-ci.

11. Un procédé selon l'une quelconque des revendications 1 à 10, dans lequel le polyisocyanate est le 3-isocyanatométhyl-3,5,5-triméthylcyclohexylisocyanate, le 1,6-hexyldiisocyanate, le 1,5-pentyldiisocyanate ou le dicyclohexyl-méthane-4,4'-diisocyanate, ou des mélanges de ceux-ci.

12. Un procédé selon l'une quelconque des revendications 1 à 11, dans lequel le carbodiimide à fonction aziridine n'est pas génotoxique.

13. Polycarbodiimide à fonction aziridine pouvant être obtenu par le procédé tel que défini dans l'une quelconque des revendications précédentes.

14. Mélange de revêtement comprenant le polycarbodiimide à fonction aziridine selon la revendication 13 en tant qu'agent de réticulation et un polymère dispersé dans l'eau, lequel polymère contient des fonctions acide carboxylique.

15. Matériau durci obtenu en appliquant le mélange de revêtement de la revendication 14 à un substrat, et l'évaporation de l'eau et, s'il est présent, d'un autre solvant.

16. Produit revêtu comprenant un revêtement du matériau durci selon la revendication 15.
